(19) Europäisches Patentamt
European Patent Office
Office européen des brevets

(11) **EP 3 185 002 B1**

(12) **FASCICULE DE BREVET EUROPEEN**

(45) Date de publication et mention
de la délivrance du brevet:
**06.06.2018 Bulletin 2018/23**

(51) Int Cl.:
***G01N 23/20*** *(2018.01)*

(21) Numéro de dépôt: **16206496.8**

(22) Date de dépôt: **22.12.2016**

(54) **PROCÉDÉ DE CALIBRATION D'UN SYSTÈME D'ANALYSE PAR DIFFRACTION X**

VERFAHREN ZUR KALIBRIERUNG EINES RÖNTGENBEUGUNGSANALYSESYSTEMS

METHOD FOR CALIBRATING A SYSTEM FOR ANALYSIS BY X-RAY DIFFRACTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2015 FR 1563318**

(43) Date de publication de la demande:
**28.06.2017 Bulletin 2017/26**

(73) Titulaire: **Commissariat à l'énergie atomique
et aux énergies alternatives
75015 Paris (FR)**

(72) Inventeurs:
• **TABARY, Joachim
38100 GRENOBLE (FR)**
• **BARBES, Damien
38000 GRENOBLE (FR)**
• **PAULUS, Caroline
38000 GRENOBLE (FR)**

(74) Mandataire: **GIE Innovation Competence Group
310, avenue Berthelot
69372 Lyon Cedex 08 (FR)**

(56) Documents cités:
**WO-A1-2014/045045 US-A1- 2004 109 531
US-A1- 2010 124 315**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE TECHNIQUE

Le domaine technique de l'invention est l'analyse d'un objet par une analyse spectrométrique d'un rayonnement ionisant diffracté par ledit objet. L'invention s'applique aussi bien à l'analyse de tissus biologiques, à des fins de diagnostic, qu'au contrôle non destructif dans le domaine industriel ou pour des applications liées à la sécurité.

## ART ANTERIEUR

La spectrométrie de diffraction X, plus connue selon l'acronyme EDXRD (Energy Dispersive X Ray Diffraction) est une technique d'analyse non destructive utilisée pour l'identification de matériaux composant un objet. Cette technique est basée sur la diffusion élastique d'un rayonnement électromagnétique ionisant, aussi appelée diffusion Rayleigh. Elle a déjà été appliquée dans la détection d'explosifs ou d'autres substances illicites. D'une façon générale, cette technique consiste à irradier un objet à l'aide d'un rayonnement X polyénergétique et à déterminer le spectre en énergie d'un rayonnement diffusé, par l'objet, selon de faibles angles de diffusion, typiquement compris entre 1° et 20°, par rapport à la trajectoire du rayonnement X incident à l'objet. L'analyse de ce spectre permet d'identifier les matériaux constituant l'objet. En effet, la plupart des matériaux présentent une signature spectrale déterminée, dépendant de leur structure atomique ou moléculaire. La comparaison des spectres de diffusion mesurés avec des signatures de matériaux connus permet de remonter à la composition de l'objet.

Dans les dispositifs connus jusqu'à ce jour, une source d'irradiation produit un rayonnement X polyénergétique se propageant vers un objet, un collimateur primaire, ou pré-collimateur étant disposé entre la source et l'objet, de façon à former un faisceau de rayonnement X finement collimaté vers l'objet. Un deuxième collimateur est ensuite placé entre l'objet analysé et un détecteur, ce dernier étant apte à acquérir un spectre en énergie du rayonnement diffusé par l'objet. Des dispositifs fonctionnant selon ce principe sont décrits dans WO2014/045045 ou dans WO2016/001536.

Le volume de l'objet analysé correspond à une intersection entre ledit faisceau, se propageant à travers l'objet, et un champ d'observation du détecteur, ce champ étant défini, entre autre, par l'ouverture du deuxième collimateur et la taille du détecteur. Ainsi, pour un même détecteur, le champ d'observation est d'autant plus élevé que l'ouverture du deuxième collimateur est importante. Cela permet d'augmenter le volume de l'objet observé, ainsi que d'augmenter la quantité de rayonnement diffusé détectée.

Toutefois, lorsque le champ d'observation augmente, le détecteur peut détecter des photons diffusés par différentes parties de l'objet, selon différents angles de diffusion. Or, l'angle de diffusion est un paramètre clef, car il permet de convertir les données mesurées, prenant la forme de spectres en énergie, en des signatures spectrales représentatives du matériau constituant l'objet examiné, ces dernières étant généralement exprimées sous la forme d'une grandeur dite transfert de quantité de mouvement. De plus, l'objet analysé peut ne pas être homogène et comporter différentes parties, chacune d'entre elles ayant sa propre signature spectrale. Il est donc intéressant de pouvoir diviser l'objet spatialement en différents volumes élémentaires, et de déterminer une signature spectrale, dite signature de diffusion associée à chacun de ces volumes élémentaires.

De ce fait, une fonction de dispersion angulaire et/ou spatiale du dispositif de mesure doit être déterminée au cours d'une procédure de calibration. Les inventeurs ont établi une méthode expérimentale permettant d'obtenir une telle fonction de dispersion.

## EXPOSE DE L'INVENTION

Un objet de l'invention est un procédé de calibration d'un dispositif d'analyse d'un objet (10), ledit dispositif d'analyse comportant :

- une source d'irradiation apte à irradier ledit objet, configurée pour émettre un rayonnement électromagnétique ionisant se propageant vers l'objet selon un axe de propagation ;
- un détecteur, comportant au moins un pixel, apte à détecter un rayonnement diffusé par l'objet ainsi irradié, et à en acquérir un spectre en énergie, ledit rayonnement diffusé se propageant selon une direction formant un angle, dit angle de diffusion, aigu par rapport audit axe de propagation ;

le procédé de calibration comprenant les étapes suivantes :

a) irradiation d'un objet de calibration par ladite source d'irradiation, de telle sorte qu'au moins un pixel dudit détecteur détecte un rayonnement diffusé par l'objet de calibration ainsi irradié, et en acquiert un spectre en énergie ;

b) déplacement de l'objet de calibration successivement selon différentes positions le long dudit axe de propagation, et à chaque position, acquisition, par ledit pixel, d'un spectre du rayonnement diffusé par ledit objet de calibration dit spectre de calibration, chaque spectre étant associé à une position de l'objet de calibration ;

c) sur chaque spectre de calibration acquis lors de l'étape b), identification d'un pic de calibration caractéristique dudit objet de calibration ;

d) détermination d'un paramètre du pic de calibration identifié lors de l'étape c) ;

e) obtention d'une fonction de dispersion associée audit pixel à partir des paramètres déterminés lors de l'étape d) aux différentes positions dudit objet de calibration, ladite fonction de dispersion représentant une dispersion de l'intensité et/ou de l'angle de diffusion de rayonnements diffusés détectés par ledit pixel aux différentes positions de l'objet de calibration.

Par paramètre du pic, on entend une intensité (ou amplitude) du pic, c'est-à-dire un paramètre représentant l'aire ou la hauteur de ce pic, et/ou une énergie associée à ce pic, c'est-à-dire un paramètre représentant l'énergie à laquelle ce pic est détecté.

Lorsque, lors de l'étape c) aucun pic de calibration n'est identifiable sur un spectre de calibration, le spectre de calibration n'est pas pris en compte pour la détermination de la fonction de dispersion associée au pixel.

L'objet de calibration est un objet dont la composition est connue.

Selon un mode de réalisation,

- l'étape d), comporte une détermination d'une intensité dudit pic de calibration identifié sur chaque spectre de calibration;
- l'étape e) comporte une détermination d'une fonction de dispersion, dite fonction de dispersion spatiale d'intensité, à partir des intensités du pic de calibration déterminées à chaque position de l'objet de calibration, ladite fonction de dispersion représentant une quantité de rayonnement diffusé détectée par ledit pixel en fonction de la position de l'objet de calibration.

Selon un mode de réalisation,

- l'étape d) comporte une détermination d'une énergie dudit pic de calibration identifié sur chaque spectre de calibration ;
- l'étape e) comporte,

  - un calcul d'un angle de diffusion à partir de ladite énergie déterminée sur chaque spectre de calibration ;
  - une détermination d'une fonction de dispersion, dite fonction de dispersion spatiale des angles de diffusion, à partir des angles de diffusion obtenus à chaque position de l'objet de calibration, ladite fonction de dispersion représentant les angles de diffusion des rayonnements diffusés détectés par ledit pixel en fonction de la position de l'objet de calibration.

Le procédé peut comporter une étape f) de détermination d'un angle de diffusion moyen pour ledit pixel.

Selon un mode de réalisation,

- l'étape d) comporte une détermination d'une intensité et d'une énergie dudit pic de calibration identifié sur chaque spectre de calibration ;
- l'étape e) comporte,

  - un calcul d'un angle de diffusion à partir de ladite énergie déterminée sur chaque spectre de calibration, ledit angle de diffusion étant associé à ladite intensité dudit pic de calibration ;
  - une détermination d'une fonction de dispersion, dite fonction de dispersion angulaire d'intensité, représentant une distribution de l'intensité des rayonnements de diffusion détectés par ledit pixel en fonction de l'angle de diffusion de ces rayonnements.

Le procédé peut alors comporter une étape f') d'interpolation de ladite fonction de dispersion angulaire d'intensité, entre les différents angles de diffusion obtenus lors de l'étape e), à chaque position de l'objet de calibration, de façon à obtenir une fonction de dispersion angulaire d'intensité dite interpolée. Il peut également comporter une étape g) de détermination d'une matrice de réponse angulaire, associée audit pixel, à partir de ladite fonction de dispersion angulaire d'intensité interpolée, chaque ligne ou colonne de ladite matrice étant associée à une énergie et représentant une distribution probabilité du transfert de quantité de mouvement lorsque ledit pixel détecte un rayonnement de diffusion à ladite énergie.

Selon un mode de réalisation, le détecteur comporte une pluralité de pixels, et le procédé comporte une détermination de ladite fonction de dispersion pour chaque pixel. Les pixels sont des pixels virtuels, obtenus par une sub-pixelisation de pixels physiques du détecteur.

Un autre objet de l'invention est un support d'enregistrement d'informations, comportant des instructions pour l'exécution d'un procédé tel que décrit dans cette demande, ces instructions étant aptes à être exécutées par un processeur, en particulier un mico-processeur.

## FIGURES

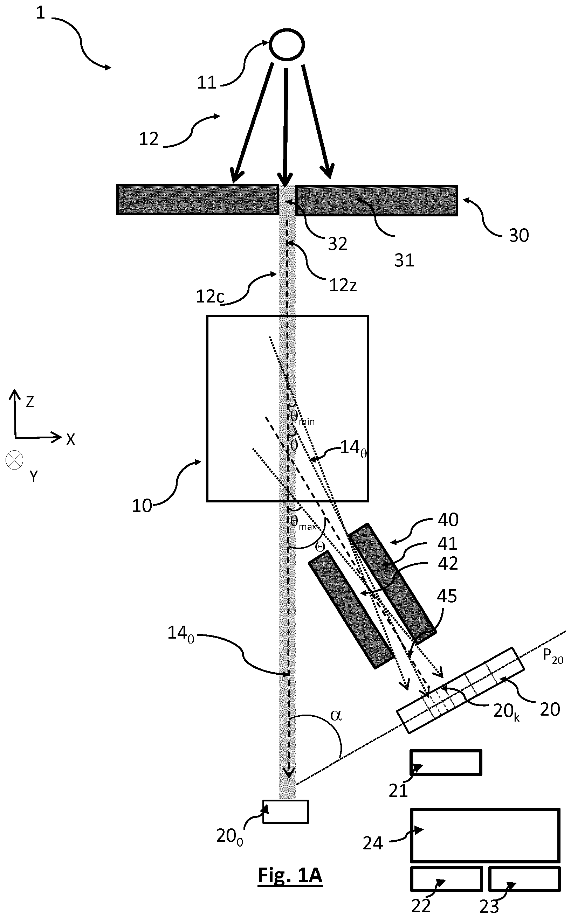

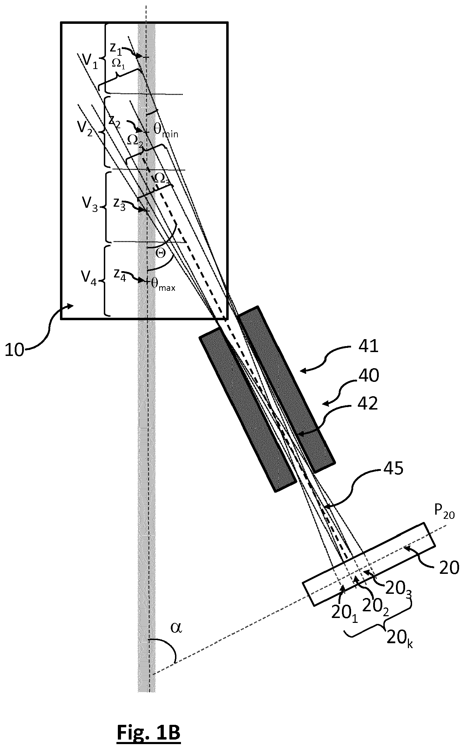

La figure 1A représente un exemple de dispositif d'analyse d'un objet par diffraction X selon l'invention. La figure 1B représente un détail de la figure 1A, en illustrant le champ d'observation de chaque pixel ainsi que la décomposition de l'objet en volumes élémentaires.

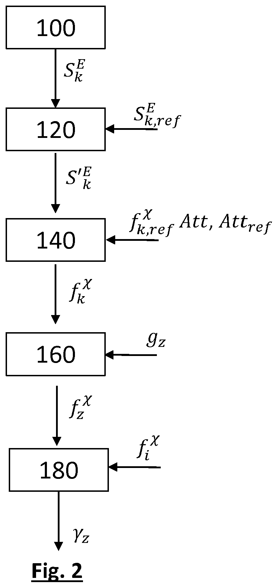

La figure 2 représente les principales étapes d'un procédé d'analyse d'un objet à l'aide du dispositif représenté sur les figures 1A et 1B.

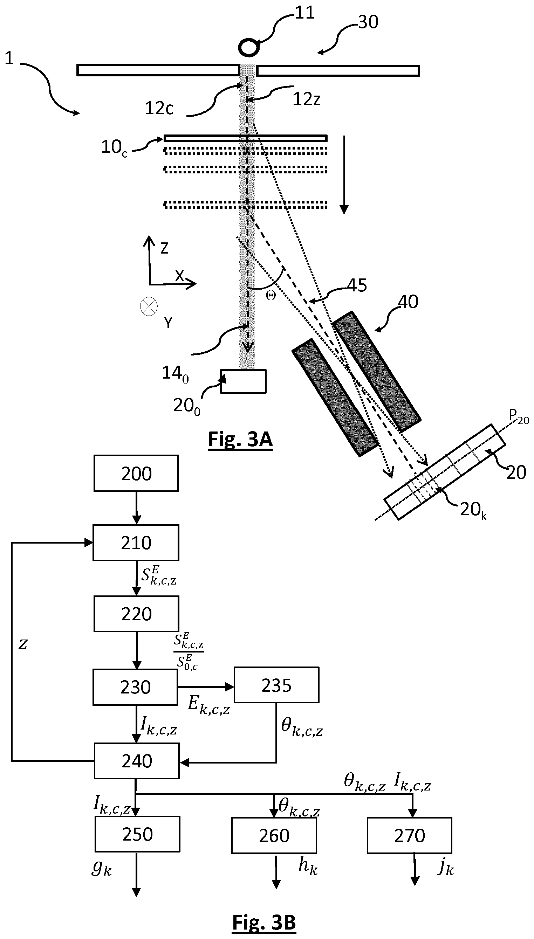

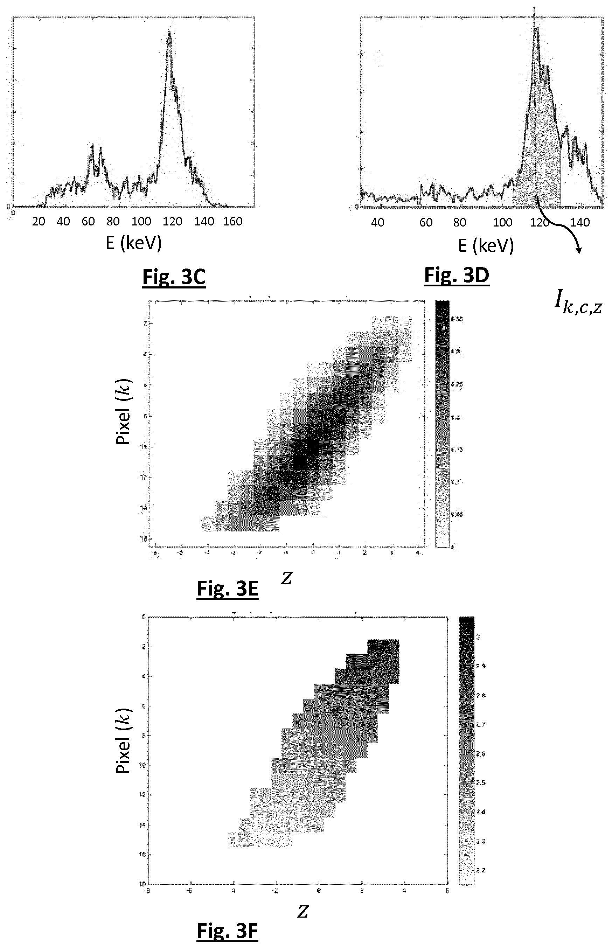

La figure 3A représente un dispositif permettant l'obtention des fonctions de dispersion décrites dans cette demande. La figure 3B illustre les principales étapes d'un procédé permettant l'obtention de telles fonctions. Les figures 3C et 3D montrent un exemple d'un spectre de calibration présentant un pic de diffraction caractéristique, dit pic de calibration, dont l'intensité et/ou l'énergie peuvent être mesurées pour constituer une fonction de dispersion spatiale ou angulaire. La figure 3D représente le spectre de la figure 3C après normalisation de ce dernier par un spectre dit de transmission. La figure 3E représente des fonctions de dispersion, dites spatiales, respectivement associées à différents pixels. La figure 3F représente des fonctions de dispersion, dites angulaires, respectivement associées ces mêmes pixels.

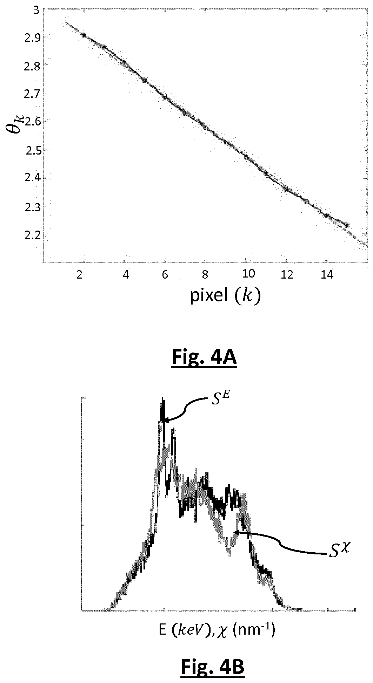

La figure 4A est une courbe traçant un angle de diffusion moyen associé à différents pixels, sur laquelle a été tracée une courbe de tendance linéaire en pointillés. La figure 4B représente un spectre en énergie obtenu en sommant des spectres en énergie respectivement acquis par différents pixels, ainsi qu'un spectre en transfert de quantité de mouvement obtenu en sommant des spectres en quantité de mouvement obtenus par lesdits pixels, chaque spectre en quantité de mouvement d'un pixel étant obtenu par application d'un changement de variable au spectre en énergie acquis par ledit pixel, ledit changement de variable prenant en compte l'angle de diffusion moyen associé audit pixel.

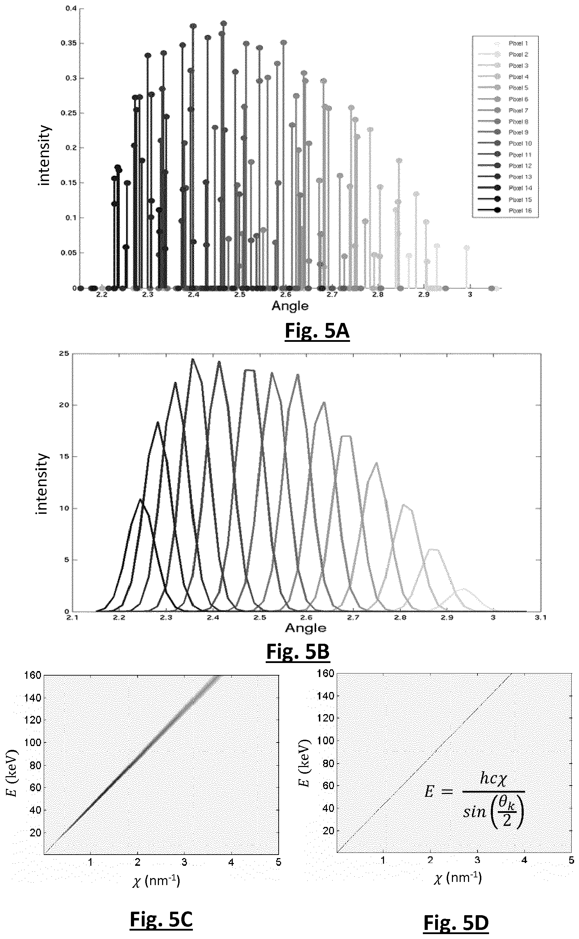

La figure 5A représente une fonction de dispersion dite fonction de dispersion angulaire d'intensité, établie pour plusieurs pixels. La figure 5B montre une fonction de dispersion angulaire d'intensité interpolée, établie pour les pixels évoqués en lien avec la figure 5A. La figure 5C est une illustration d'une matrice dite de dispersion angulaire associée à un pixel. La figure 5D est une illustration d'une autre matrice de dispersion angulaire associée à ce pixel.

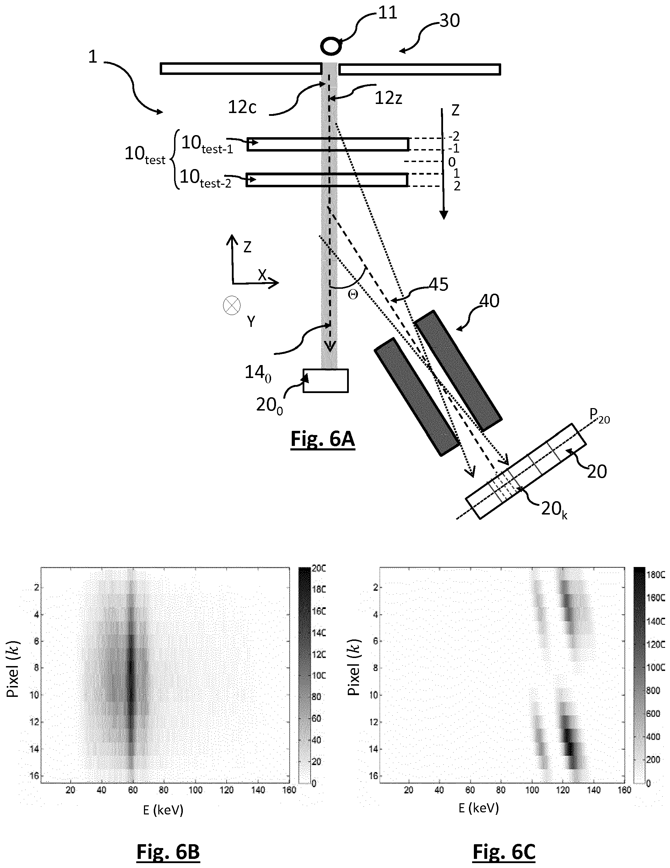

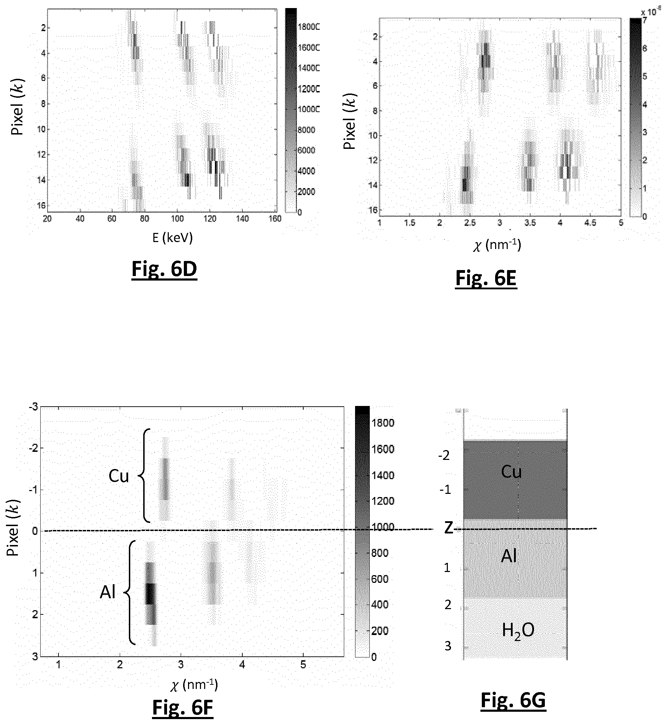

La figure 6A représente un dispositif expérimental mettant en oeuvre un objet test. La figure 6B montre différents spectres de diffusion, acquis par différents pixels virtuels, obtenus en mettant en oeuvre un matériau de référence, en l'occurrence du plexiglas. La figure 6C montre différents spectres de diffusion, acquis par différents pixels virtuels, lors d'un essai expérimental mettant en oeuvre un objet test. Les figures 6D et 6E représentent des fonctions de réponse mesurées par différents pixels, exprimées respectivement en fonction de l'énergie ou en fonction du transfert en quantité de mouvement. La figure 6F représente les signatures spectrales de différents volumes élémentaires, obtenues à partir des fonctions de réponse illustrées sur la figure 6E. La figure 6G illustre les différents matériaux identifiés dans l'objet test.

## EXPOSE DE MODES DE REALISATION PARTICULIERS

La figure 1A représente un exemple de dispositif d'analyse 1 d'un objet 10 par spectrométrie de diffraction X. Une source d'irradiation 11 émet un rayonnement électromagnétique ionisant 12 se propageant vers l'objet 10, dont on souhaite déterminer la composition.

Le dispositif comprend un premier collimateur 30, ou pré-collimateur, apte à collimater le rayonnement émis par la source d'irradiation 11 pour former un faisceau incident collimaté $12_c$ se propageant selon un axe de propagation $12_z$ vers l'objet. Le dispositif comporte également un détecteur 20, comportant des pixels $20_k$, chaque pixel étant apte à détecter un rayonnement $14_\theta$ diffusé par l'objet 10, selon une direction formant un angle de diffusion $\theta$ par rapport à l'axe de propagation $12_z$. Ce rayonnement est par exemple issu d'une diffusion élastique d'un rayonnement formant le faisceau incident collimaté 12c.

Le dispositif d'analyse 1 comporte un deuxième collimateur 40, interposé entre l'objet 10 et le détecteur 20. Ce deuxième collimateur 40 permet de diriger sélectivement un rayonnement de diffusion $14_\theta$, diffusé par l'objet 10, selon un angle de diffusion $\theta$ par rapport à l'axe de propagation $12_z$, compris dans une plage angulaire $\Delta\theta$. Par diriger sélectivement, on entend qu'un rayonnement diffusé selon un angle non compris dans cette plage angulaire $\Delta\theta$ est atténué par le deuxième collimateur.

Le dispositif d'analyse 1 est placé dans un référentiel auquel est rattaché un repère orthogonal X, Y, Z tel que représenté sur la figure 1A.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou $\gamma$. De préférence, la source de rayonnement ionisant est poly-énergétique, le rayonnement incident étant émis selon une plage d'énergie s'étendant généralement selon plusieurs dizaines voire centaines de keV. Il s'agit notamment d'un tube émetteur de rayons X.

La source d'irradiation 11 est un tube à rayons X doté d'une anode de tungstène, soumise à une tension, généralement comprise entre 40 et 170 kV que l'on peut varier afin de modifier la plage d'énergie du rayonnement incident 12. Le détecteur comporte des pixels répartis selon une ligne ou selon une matrice bidimensionnelle chaque pixel s'étendant selon une surface de 2.5 * 2.5 mm$^2$, son épaisseur étant de 5 mm. Le matériau constituant chaque pixel est un semi-conducteur, par exemple du CdTe ou du CdZnTe ou tout autre matériau apte à réaliser des mesures spectrométriques, de préférence à température ambiante. Il pourrait également s'agir d'un matériau de type scintillateur, sous réserve d'une résolution en énergie suffisante. Le détecteur est résolu en énergie, et chaque pixel permet d'obtenir des spectres selon des canaux d'énergie de l'ordre de 1 keV. La source d'irradiation 11 peut comporter un écran métallique, par exemple du Cuivre, de façon à bloquer la propagation, vers le pré-collimateur 30, d'un rayonnement dont l'énergie est inférieure à 20 keV. Lorsque cet écran est du cuivre, son épaisseur est par exemple égale à 0.2 mm.

Le premier collimateur 30, ou pré-collimateur, comporte un bloc de matériau dense 31, comportant par exemple du tungstène, apte à absorber la quasi-totalité du rayonnement 12 émis par la source d'irradiation 11. Il comporte une fine ouverture 32, s'étendant selon un axe, dit axe de propagation $12_z$, permettant le passage d'un fin faisceau collimaté $12_c$. Par fine ouverture, on entend une ouverture dont le diamètre ou la plus grande diagonale est inférieure à 2 cm, voire à 1 cm. Dans cet exemple, l'ouverture est un cylindre de diamètre 1 mm.

L'objet 10 peut être une pièce industrielle dont on souhaite déterminer la qualité ou la composition. Il peut également s'agir d'un bagage que l'on souhaite contrôler. Le dispositif 1 est alors utilisé à des fins de contrôle non destructif. Il peut également s'agir d'un tissu biologique vivant, par exemple une partie du corps d'un animal ou d'un être humain. Le dispositif est alors un dispositif d'analyse médicale, à des fins d'aide au diagnostic. La partie du corps peut en particulier être un organe dans lequel suite à un premier examen, par exemple une radiographie ou un scanner, on suspecte la présence d'une anomalie, en particulier une tumeur cancéreuse.

Le deuxième collimateur 40 comporte des parois 41, réalisées selon un matériau dense, apte à absorber la quasi-totalité d'un rayonnement $14_\theta$ diffusé par l'objet en dehors de la plage angulaire précédemment évoquée. Une ouverture, pratiquée dans ledit matériau dense, définit un canal 42, s'étendant selon un axe médian 45. Par axe médian, on entend un axe s'étendant, le long du canal, à égale distance des parois délimitant le canal. Cet axe médian 45 est incliné par rapport à l'axe de propagation $12_z$ du faisceau incident collimaté $12_c$. L'angle $\Theta$ entre l'axe médian 45 du canal 42 et l'axe de propagation $12_z$, dit angle de collimation, est strictement supérieur à 0° et inférieur à 20°. Le collimateur est alors apte à transmettre, vers le détecteur 20, un rayonnement diffusé $14_\theta$ se propageant selon un angle, dit angle de diffusion $\theta$, dans une plage angulaire $\Delta\theta$ définie autour de l'angle de collimation $\Theta$. On a représenté, sur la figure 1A, deux rayonnements de diffusés $14_\theta$ délimitant le champ d'observation $\Delta\theta$ du deuxième collimateur 40, leurs angles de diffusion respectifs, constituant les bornes $\theta_{min}$ et $\theta_{max}$ de la plage angulaire associée au deuxième collimateur 40. La longueur de chaque canal est typiquement comprise entre 50 et 100 mm, tandis que l'ouverture s'étend selon quelques centaines de microns, par exemple 500 $\mu$m, selon une direction perpendiculaire à l'axe médian.

Dans le mode de réalisation représenté sur la figure 1A, le deuxième collimateur 40 ne comporte qu'un seul canal 42. Selon d'autres modes de réalisation le collimateur 40 peut comporter une pluralité de canaux $42_n$, par exemple disposés les uns parallèlement aux autres, à chaque canal étant associé un angle de collimation $\Theta_n$ et une plage angulaire $\Delta\theta_n$.

Le détecteur de rayonnement est un détecteur comprenant des pixels $20_k$ agencés selon un plan, dit plan de détection $P_{20}$. L'indice k désigne une coordonnée de chaque pixel dans le plan de détection $P_{20}$. Les pixels peuvent s'étendre selon une ligne mais en général, ils s'étendent selon une matrice régulière bidimensionnelle. Dans l'exemple décrit dans cette demande, le plan de détection $P_{20}$ s'étend selon une direction formant un angle $\alpha$ strictement inférieur à 90° par rapport à l'axe de propagation $12_z$ du rayonnement incident collimaté $12_c$. Cet angle $\alpha$ est de préférence compris entre 70° et 88° ou 89°. De préférence, le plan de détection $P_{20}$ est orthogonal à l'axe médian 45 du canal 42 du deuxième collimateur 40.

Chaque pixel $20_k$ constituant le détecteur de rayonnement 20, comporte :

- un matériau détecteur, apte à interagir avec les photons d'un rayonnement diffusé $14_\theta$, transmis par l'objet 10, à travers le deuxième collimateur 40, ce matériau étant de type scintillateur ou, de préférence, un matériau semi-conducteur compatible avec une utilisation à la température ambiante, de type CdTe ou CdZnTe ;
- un circuit électronique 21, apte à générer un signal dont l'amplitude A dépend, et est de préférence proportionnelle, à une énergie E déposée par chaque photon interagissant dans le matériau détecteur ;
- un circuit de spectrométrie, apte à établir un spectre en énergie, noté $S_k^E$ des signaux détectés pendant une période temporelle, dite période d'acquisition.

Ainsi, chaque pixel $20_k$ est apte à produire un spectre $S_k^E$ du rayonnement $14_\theta$ diffusé par l'objet.

Le terme spectre en énergie désigne un histogramme de l'amplitude A des signaux détectés au cours d'une période d'acquisition du spectre. Une relation entre l'amplitude A d'un signal et l'énergie E d'un rayonnement peut être obtenue par une fonction d'étalonnage en énergie $g$ telle que $E = g(A)$, selon des principes connus de l'homme du métier. Un spectre d'énergie $S_k^E$ peut donc prendre la forme d'un vecteur, dont chaque terme $S_k^E(E)$ représente une quantité de rayonnement détecté par le pixel $20_k$ dans une plage d'énergie $E \pm \frac{\partial E}{2}$, avec $\partial E$ étant la largeur spectrale d'un pas de discrétisation en énergie du spectre.

Le dispositif comprend également une unité de calcul, ou processeur 22, par exemple un microprocesseur, apte à traiter chaque spectre $S_k^E$ acquis par les pixels $20_k$ du détecteur 20. En particulier, le processeur est un microprocesseur relié à une mémoire programmable 23 dans laquelle est stockée une séquence d'instructions pour effectuer les opérations de traitement de spectres et de calculs décrites dans cette description. Ces instructions peuvent être sauvegardées sur un support d'enregistrement, lisible par le processeur, de type disque dur, CDROM ou autre type de mémoire. Le processeur peut être relié à une unité d'affichage 24, par exemple un écran.

Chaque pixel $20_k$ est relié à un circuit électronique 21 permettant la collection de signaux représentatifs de l'énergie d'un rayonnement de diffusion transmis par le collimateur 40. Le détecteur 20 peut être relié au processeur 22, précédemment décrit, permettant un premier traitement consistant à analyser les signaux émis par plusieurs pixels adjacents, de façon à localiser le point d'impact d'un rayonnement détecté selon une résolution spatiale inférieure au pas selon lesquels sont distribués ces pixels. Un tel traitement, connu de l'homme du métier par le terme sub-pixelisation ou sur-pixelisation, revient à former des pixels dits virtuels $20'_k$, la surface de chaque pixel virtuel pouvant être par exemple inférieure à 1mm * 1 mm, voire à 0.5 mm par 0.5 mm. Dans cet exemple, la taille des pixels virtuels est de 150 μm par 150 μm. On augmente ainsi la résolution spatiale du détecteur 20. Une telle décomposition de pixels virtuels est connue de l'homme du métier. Elle a déjà été décrite dans la publication Warburton W.K, « An approach to sub-pixel spatial resolution in room temperature X-ray detector arrays with good energy resolution » ainsi que dans Montemont et al. « Studying spatial resolution of CZT detectors using sub-pixel positioning for SPECT », IEEE transactions on nuclear science, Vol. 61, N°5, octobre 2014.

Dans la suite du texte, lorsqu'on se réfère à des pixels $20_k$, il peut indifféremment s'agir de pixels physiques ou virtuels. De préférence, il s'agit de pixels virtuels du fait de la meilleure résolution spatiale du détecteur obtenue par ce biais.

Le dispositif 1 comporte, de préférence, un détecteur, dit détecteur auxiliaire $20_0$, placé dans une configuration dite de transmission, apte à détecter non pas un rayonnement diffusé par l'objet maintenu sur le support, mais un rayonnement $14_0$ transmis par l'objet 10 selon la direction $12_z$ du faisceau incident $12_c$. Un tel rayonnement, dit rayonnement de transmission, est transmis par l'objet 10 sans avoir interagi avec ce dernier. Le détecteur auxiliaire $20_0$ permet d'établir un spectre $S_0^E$ du rayonnement $14_0$ transmis par l'objet 10, selon l'axe de propagation $12_z$ du faisceau incident collimaté $12_c$. Un tel spectre peut être utilisé pour déterminer une fonction spectrale d'atténuation *Att* de l'objet, comme décrit ultérieurement.

La figure 1B représente plus précisément l'objet 10 et le champ d'observation conféré par le collimateur 40. Sur cette figure, on distingue trois pixels $20_1 .... 20_3$ aptes à recevoir un rayonnement de diffusion $14_\theta$, à chaque pixel étant associé un champ d'observation $\Omega_1, \Omega_2, \Omega_3$. Le champ d'observation de chaque pixel est défini par la taille dudit pixel et par la géométrie du collimateur 40. L'objet peut par ailleurs être échantillonné selon une pluralité de volumes élémentaires $V_1...V_{NZ}$, de façon régulière ou non, à chaque volume élémentaire $V_z$ étant associé une coordonnée z selon l'axe de propagation $12_z$ du faisceau incident collimaté $12_c$. Nz désigne le nombre de volumes élémentaires $V_z$

considérés. Sur la figure 1B, on a représenté quatre volumes élémentaires $V_1$, $V_2$, $V_3$ et $V_4$, respectivement centrés selon des coordonnées $z_1$, $z_2$, $z_3$ et $z_4$ selon l'axe de propagation. L'idée de base de l'invention est d'obtenir une fonction de dispersion angulaire et une fonction de dispersion spatiale caractérisant ce dispositif. Ces fonctions de dispersion permettent d'estimer la composition de chaque volume élémentaire à partir des spectres $S_k^E$ acquis par les différents pixels $20_k$ du détecteur 20. Du fait de l'ouverture du collimateur, un même volume élémentaire $V_z$ peut émettre des rayonnements diffusés vers différents pixels $20_k$ du détecteur, en particulier lorsque le détecteur est subdivisé en pixels virtuels dont la taille est faible. Le spectre $S_k^E$ mesuré par chaque pixel résulte de la détection de rayonnements diffusés $14_\theta$, selon différents angles de diffusion $\theta$, par différents volumes élémentaires $V_z$ de l'objet 10. L'échantillonnage en volumes élémentaires indépendants du champ d'observation de chaque pixel permet d'effectuer une reconstruction de l'objet selon un échantillonnage fin, déterminé de façon arbitraire.

Lors de l'analyse, l'objet 10 est irradié par le faisceau incident poly-énergétique $12_c$. Sous l'effet de la diffusion élastique Rayleigh, une partie du rayonnement incident $12_c$ est diffusée dans plusieurs directions, l'intensité d'un rayonnement de diffusion pouvant être plus ou moins élevée selon le couple formé par l'énergie des photons et la direction de diffusion. Cette variation d'intensité en fonction de l'angle de diffusion $\theta$ forme une signature de diffusion, propre à chaque matériau. Dans le cas d'un cristal, l'intensité de diffusion n'est non-nulle que dans des configurations de couple énergie du photon incident /angle de diffusion précises, définies par l'équation de Bragg :

$$2d\,sin\left(\frac{\theta}{2}\right) = n\,\frac{hc}{E}\quad (1)$$

avec :

- $d$ est une distance caractéristique de l'arrangement atomique ou moléculaire d'un matériau composant l'objet irradié. Lorsque le matériau analysé est un cristal, $d$ correspond à la distance inter-réticulaire ;
- $n$ est un entier désignant l'ordre de l'interférence ;
- E désigne l'énergie du rayonnement diffusé, exprimée en keV ;
- $\theta$ désigne l'angle de diffusion ;
- $h$ et $c$ désignent respectivement la constante de Planck et la vitesse de la lumière.

Il est courant d'exprimer une grandeur, désignée par le terme transfert de quantité de mouvement, et représentée par la lettre $\chi$, exprimée en nm$^{-1}$, telle que :

$$\chi = \frac{sin\left(\frac{\theta}{2}\right)E}{hc}\,(2)$$

A chaque pixel ou pixel virtuel $20_k$, du détecteur 20 correspond un angle de diffusion, dit angle de diffusion moyen $\theta_k$, représentant l'angle le plus probable selon lequel se propage un rayonnement de diffusion $14_\theta$ détecté par le pixel. L'intérêt de la sur-pixellisation est d'aboutir à des pixels de faible taille, ce qui réduit la plage angulaire des rayonnements de diffusion susceptibles d'atteindre l'un d'entre eux.

On va à présent décrire les principales étapes de l'analyse d'un objet en se référant à la figure 2.

Au cours d'une première étape 100, l'objet 10 est irradié par la source d'irradiation 11 et chaque pixel $20_k$ du détecteur 20 acquiert un spectre $S_k^E$ du rayonnement de diffusion $14_\theta$ auquel il est exposé. Dans l'exemple, l'angle de collimation $\Theta$ peut être compris entre 1° et 20°. L'exposant $E$ représente le fait que le spectre est ici une fonction de l'énergie. Connaissant l'angle de diffusion $\theta_k$ associé à chaque pixel $20_k$, il est possible d'exprimer un spectre de diffusion non pas en fonction de l'énergie mais en fonction du transfert de quantité de mouvement $\chi$, en procédant à un changement de variable selon l'équation (2), auquel cas le spectre est noté $S_k^\chi$.

Le spectre en énergie peut être exprimé selon l'équation suivante :

$$S_k^E = D_k.\left(S_{inc} \times Att \times \left(A_k.f_k^\chi\right)\right)\,(3)$$

où :

- $S_k^E$ est le spectre en énergie mesuré par le pixel $20_k$, de dimension $(N_E,1)$ ; $N_E$ désigne le nombre de canaux du spectre, c'est-à-dire le nombre de pas de discrétisation de l'énergie.

- $D_k$ est une matrice de réponse du pixel $20_k$, représentant les imperfections de la détection. Chaque terme $D_k(E,E_i)$ de cette matrice représente une probabilité qu'un photon incident au détecteur, d'énergie $E_i$, soit considéré par le détecteur comme ayant une énergie $E$. Cette matrice est ici une matrice carrée de taille $N_E*N_E$;

- $S_{inc}$ est un spectre en énergie du faisceau incident collimaté 12c, de dimension $(N_E,1)$ ;

- $Att$ est un vecteur, dit fonction spectrale d'atténuation, représentant une atténuation du spectre incident par objet 10, de dimension $(N_E,1)$ ;

- $A_k$ est une matrice de dispersion angulaire associée à chaque pixel $20_k$, de taille $(N_E,N_\chi)$, ou $N_\chi$ représente le nombre de pas de discrétisation du transfert de quantité de mouvement $\chi$. Chaque terme $A_k(E,\chi)$ représente une probabilité que l'énergie d'un photon détecté d'énergie $E$ par un pixel $20_k$ corresponde à un transfert de quantité de mouvement égal à $\chi$, sachant l'équation (2). L'application de cette matrice permet d'effectuer un changement de variable entre un spectre $S_k^E$, mesuré par ledit pixel et exprimé en fonction de l'énergie E, et ce même spectre $S_k^\chi$ exprimé en fonction du transfert de quantité de mouvement $\chi$. L'établissement de cette matrice sera détaillé plus tard, en lien avec la détermination d'une fonction de dispersion angulaire des intensités de diffusion associée au pixel. Dans une première approche, la matrice de réponse angulaire $A_k$ peut être considérée comme étant la matrice représentant une fonction bijective représentant un changement de variable avec $A_k(E,\chi) = 1$ lorsque $E = \dfrac{hc\chi}{sin\left(\frac{\theta_k}{2}\right)}$, où $\theta_k$ représente un angle de diffusion moyen associé au pixel $20_k$ considéré. La détermination de cet angle de diffusion moyen $\theta_k$ sera explicitée ci-après.

- $f_k^\chi$ est une fonction de diffusion associée à chaque pixel $20_k$. Il s'agit d'un spectre des valeurs du transfert de quantité de mouvement $\chi$ mesurées par ledit pixel $20_k$. Cette fonction de diffusion ne dépend que des matériaux présents dans les volumes élémentaires $V_z$ s'étendant dans le champ d'observation $\Omega_k$ dudit pixel $20_k$. La dimension de $f_k^\chi$ est $(N_\chi, 1)$ ;

- $\times$ désigne le produit de Hadamard (produit terme à terme) et . désigne le produit matriciel.

Par ailleurs, dans cet exemple, on considère que la résolution en énergie du détecteur est suffisamment bonne, pour que la matrice de réponse $D_k$ de chaque pixel $20_k$ soit considérée comme étant la matrice identité.

L'équation (3) devient :

$$S_k^E = S_{inc} \times Att \times f_k^E \text{ (5)}$$

où $f_k^E$ désigne la fonction de diffusion mesurée par un chaque pixel $20_k$ en fonction de l'énergie. A partir de cette fonction de diffusion, exprimée en fonction de l'énergie $E$, on peut établir une fonction de diffusion $f_k^\chi$, estimée en fonction du transfert de quantité de mouvement $\chi$, le passage entre les vecteurs $f_k^E$ et $f_k^\chi$ étant établi par l'application de la matrice $A_k$ précédemment évoquée, avec $f_k^E = A_k . f_k^\chi$

Dans les étapes 120 et 140, on considère un spectre de diffusion de référence $S_{k,ref}^E$ obtenu, pour chaque pixel $20_k$, en disposant un objet de référence $10_{ref}$, réalisé à l'aide d'un matériau connu, à la place de l'objet 10. Les propriétés de diffusion de l'objet de référence sont connues. On peut alors établir une fonction de diffusion de référence $f_{k,ref}^E$, $f_{k,ref}^\chi$ associée à chaque pixel $20_k$. L'obtention de cette fonction de diffusion de référence sera détaillée par la suite. En considérant que le spectre $S_{inc}$ du faisceau incident collimaté 12c n'évolue pas entre la mesure du spectre de diffusion de l'objet de référence $S_{k,ref}^E$ et la mesure du spectre de diffusion $S_k^E$ de l'objet analysé, le spectre du rayonnement diffusé par chaque pixel $20_k$ peut être exprimé comme suit.

$$S_{k,ref}^E = S_{inc} \times Att_{ref} \times f_{k,ref}^E \quad (6),$$

où $Att_{ref}$ désigne une fonction spectrale d'atténuation de l'objet de référence $10_{ref}$.

Il est alors possible de former un spectre de diffusion, noté $S'^E_k$, normalisé par ledit spectre de diffusion de référence $S_{k,ref}^E$, et tel que :

$$S'^E_k = \frac{S_k^E}{S_{k,ref}^E} = \frac{Att \times f_k^E}{Att_{ref} \times f_{k,ref}^E} \quad (7)$$

Cette normalisation constitue l'étape 120. A partir de ce spectre normalisé, il est possible de déterminer une fonction de diffusion $f_k^{\chi}$ de chaque pixel $20_k$, ce qui constitue l'étape 140, selon l'expression :

Ainsi,

$$f_k^{\chi} = f_{k,ref}^{\chi} \times A_k^{-1} . \left[ \frac{S'^E_k \times Att_{ref}}{Att} \right] \quad (8)$$

où $f_{k,ref}^{\chi}$ désigne la fonction de diffusion de référence associée au pixel, exprimée en fonction du transfert de quantité de mouvement.

Ainsi, connaissant $Att_{ref}$, $f_{k,ref}^{\chi}$, $Att$, et ayant mesuré $S_k^E$, il est possible d'estimer $f_k^{\chi}$ par l'expression (8).

Au cours d'une étape 160 on cherche à obtenir une signature de diffusion représentative de chaque volume élémentaire de l'objet à partir des fonctions de diffusion $f_k^{\chi}$ respectivement obtenues par chaque pixel $20_k$. En effet, compte tenu de l'ouverture angulaire du collimateur, différents rayonnements diffusés, respectivement issus de différents volumes élémentaires peuvent être détectés par un même pixel $20_k$.

Cette dispersion spatiale est caractérisée par une fonction de dispersion spatiale d'intensité $g_k$, dont chaque terme $g_k(z)$ représente une intensité du rayonnement diffusé par un volume élémentaire $V_z$, centré autour d'une coordonnée z, et atteignant un pixel $20_k$. Cette fonction de dispersion $g_k$ est établie pour chaque pixel $20_k$. L'établissement de cette fonction de dispersion $g_k$ sera décrit par la suite.

On peut constituer une matrice de dispersion spatiale d'intensité $G$, dont chaque ligne est formée par les différentes valeurs de la fonction de dispersion spatiale d'intensité $g_k$, associée à un pixel $20_k$, en fonction de z. Chaque terme $G(k,z)$ de la matrice $G$ représente l'intensité du signal détecté par un pixel $20_k$ et provenant d'un volume élémentaire $V_z$ centré en z. Autrement dit, $G(k,z) = g_k(z)$.

L'étape 160 revient à prendre en compte cette matrice de dispersion en constituant une matrice $F_k$, dont chaque ligne représente une fonction de diffusion $f_k^{\chi}$ obtenue par un pixel $20_k$. Chaque terme $F_k(k,\chi)$ de cette matrice représente une valeur de la fonction de diffusion $f_k^{\chi}$ mesurée, à la valeur $\chi$, par un pixel $20_k$. La dimension de cette matrice est $(N_k, N_{\chi})$, où $N_k$ désigne le nombre de pixels.

On cherche à constituer une matrice $F_z$ de signatures de diffusion de l'objet 10, dont chaque ligne représente une signature spectrale $f_z^{\chi}$ relative à un volume élémentaire $V_z$ centré en z. Chaque terme $F_z(z,\chi)$ de cette matrice représente une valeur de la signature de diffusion (ou facteur de forme) à la valeur $\chi$, d'un volume élémentaire $V_z$. La dimension de cette matrice est $(N_z, N_{\chi})$, où $N_z$ désigne le nombre de volumes élémentaires $V_z$ considérés.

La matrice de dispersion spatiale d'intensité G établit un lien entre les fonctions de diffusion de chaque pixel, formant la matrice $F_k$, et les signatures de chaque volume élémentaire, formant la matrice $F_Z$, de telle sorte que : $F_k = G. F_Z$ (9).

Il s'agit alors, à partir de mesures collectées au niveau de chaque pixel, d'obtenir une information caractérisant un rayonnement diffusé par chaque volume élémentaire.

Ayant déterminé la matrice de dispersion spatiale d'intensité G, et ayant formé, à partir des mesures, la matrice des fonctions de diffusion $F_k$, on peut obtenir une estimation de la matrice des signatures de diffusion $F_Z$ à l'aide d'un algorithme d'inversion. Parmi les algorithmes d'inversion itératifs couramment utilisés, on peut utiliser un algorithme de type MLEM, acronyme anglais signifiant « Maximum Likelihood Expectation Maximization ». Selon un tel algorithme, la valeur de chaque terme de la matrice $F_Z$ peut être estimée selon l'expression suivante :

$$\hat{F}_z^n(z,\chi) = \hat{F}_z^{n-1}(z,\chi) \frac{1}{\sum_k G(k,z)} \sum_k \frac{F_k(k,\chi).G(k,z)}{\sum_Z G(k,z).\hat{F}_z^{n-1}(z,\chi)} \ (10)$$

l'exposant $n$ désignant le rang de chaque itération. Chaque itération permet alors d'obtenir une estimation $\hat{F}_z^n$ de la matrice $F_Z$.

Les itérations se poursuivent jusqu'à l'atteinte d'un critère de convergence, ce dernier pouvant être un nombre prédéterminé d'itérations, ou une faible variation entre les valeurs estimées au cours de deux itérations successives. La mise en oeuvre de cet algorithme suppose une étape d'initialisation de la matrice $F_z$. Par exemple, cette initialisation est telle que :

$$F_z^{n=0} = \begin{bmatrix} 1 & \cdots & 1 \\ \vdots & \ddots & \vdots \\ 1 & \cdots & 1 \end{bmatrix} (11)$$

A l'issue de l'étape 160, on dispose d'une estimation de la matrice $F_z$, dont chaque ligne représente une signature de diffusion $f_z^\chi$ d'un matériau constituant un volume élémentaire $V_z$ de l'objet 10.

Au cours d'une étape 180, on identifie le matériau constituant chaque volume élémentaire $V_z$ à partir de la signature de diffusion $f_z^\chi$ qui lui est associée. Pour cela on dispose de signatures spectrales de diffusion de $f_i^\chi$ de différents matériaux étalons connus 10$i$. Ces signatures de diffusion étalons sont soit établies expérimentalement, soit obtenues dans la littérature. On peut déterminer les proportions $\gamma_z(i)$ du matériau 10$i$ dans le volume élémentaire $V_z$ par l'expression :

$$(\gamma_z(i=1)....\gamma_z(i=N_i)) = Argmin\left(\left\|f_z^\chi - \sum_i \gamma_z(i)\ f_i^\chi\right\|^2\right) \ (12)$$

où $N_i$ désigne le nombre de matériaux étalons 10$i$ connus.

On obtient un vecteur $\gamma_z$ dont chaque terme $\gamma_z(i)$ représente une proportion du matériau 10$i$ dans le volume élémentaire $V_z$.

Le procédé décrit ci-dessus suppose l'établissement préalable de paramètres de calibration du système de mesure. Plus précisément, le procédé met en oeuvre, pour chaque pixel, des fonctions de dispersions représentant une dispersion de l'intensité et/ou des angles de diffusions de rayonnements diffusés détectés par ledit pixel, en fonction des positions, dans l'objet, depuis lesquels lesdits rayonnements diffusés sont émis. Ainsi, à chaque pixel 20$_k$ correspond :

- une fonction de dispersion spatiale d'intensité $g_k$, précédemment évoquée, et représentant l'intensité d'un rayonnement de diffusion émis par un volume élémentaire $V_z$, centré autour d'une coordonnée z, et atteignant un pixel 20$_k$. La connaissance de la fonction de dispersion spatiale d'intensité de chaque pixel permet de constituer la matrice de dispersion spatiale d'intensité G précédemment évoquée.
- une fonction de dispersion spatiale d'angles de diffusion, notée $h_k$, représentant une distribution des angles de diffusion θ des rayonnements diffusés 14$_θ$ détectés par un pixel 20$_k$.
- une fonction de dispersion angulaire d'intensités de diffusion, notée $j_k$, représentant une distribution de l'intensité des rayonnements de diffusion détectés par ledit pixel en fonction de l'angle de diffusion. La connaissance de cette fonction de dispersion permet de déterminer la matrice de réponse angulaire $A_k$, précédemment décrite, dudit pixel $20_k$, et/ou l'angle de diffusion moyen $\theta_k$ dudit pixel. Ainsi, la connaissance de cette fonction de dispersion angulaire permet d'élaborer un changement de variable entre l'énergie $E$ et le transfert de quantité de mouvement $\chi$ et réciproquement, en utilisant la matrice de réponse angulaire.

Un objet de l'invention est d'établir ces fonctions de dispersion, en particulier de façon expérimentale, les inventeurs considérant qu'une telle détermination est plus fiable qu'en se basant sur des modélisations basées sur des codes de calcul.

Obtention des fonctions de dispersions spatiales d'intensité $g_k$

Le passage entre les fonctions de diffusion $f_k^{\chi}$ mesurées par un pixel et les signatures de diffusion $f_z^{\chi}$ du rayonnement émis par un volume élémentaire $V_z$ nécessite l'utilisation de fonctions de dispersion spatiale d'intensité $g_k$, associées à chaque pixel $20_k$, à partir desquelles on peut établir la matrice de dispersion spatiale d'intensité $G$ précédemment décrite en lien avec l'étape 160. Ces fonctions de dispersion spatiale d'intensité $g_k$ peuvent être obtenues de façon expérimentale, en utilisant un objet de calibration $10_c$, constitué par un matériau connu se présentant sous la forme d'une plaque fine, apte à être déplacée successivement le long de l'axe de propagation $12_z$ du faisceau incident collimaté $12_c$. Par plaque fine, on entend une largeur de l'ordre de celle d'un volume élémentaire, c'est-à-dire de l'ordre de la résolution spatiale que l'on souhaite obtenir.

La figure 3A représente un dispositif permettant l'obtention des fonctions de dispersions spatiales de chaque pixel $20_k$, en lien avec les principales étapes du procédé illustrées sur la figure 3B. L'objet de calibration $10_c$ est translaté selon l'axe de propagation $12_z$ de manière à occuper successivement les différents volumes élémentaires $V_z$ d'un objet analysé. A chaque position z de l'objet de calibration $10_c$, ce dernier est irradié par la source d'irradiation 11 et chaque pixel $20_k$ acquiert un spectre de calibration $S_{k,c,z}^{E}$ du rayonnement diffusé lorsque l'objet de calibration occupe une position z.

L'objet de calibration $10_c$ est choisi de telle sorte que sa signature de diffusion, c'est-à-dire le spectre en transfert de quantité de mouvement du rayonnement diffusé lors de l'irradiation de cet objet, présente des pics caractéristiques. On peut par exemple choisir l'aluminium, d'épaisseur 3 mm, présentant un pic caractéristique à 2.0248 Å. Cela correspond à un transfert de quantité de mouvement $\chi = 2.469$ nm$^{-1}$. L'épaisseur de l'objet de calibration doit être cohérente avec la résolution spatiale recherchée. Elle peut par exemple être comprise entre 1 mm et 1 cm si l'on souhaite obtenir une résolution spatiale inférieure à 1 cm.

Considérons par exemple un pixel $20_k$ configuré pour recevoir essentiellement un rayonnement de diffusion émis sous un angle $\theta$ de 2.5°. La figure 3C représente un spectre $S_{k,c,z}^{E}$ du rayonnement diffusé acquis par ce pixel. Ce spectre peut être normalisé par un spectre de transmission $S_{0,c}^{E}$ mesuré par le détecteur auxiliaire $20_0$, placé en transmission, afin d'obtenir un spectre normalisé représenté sur la figure 3D. Le spectre de transmission $S_{0,c}^{E}$ correspond à un spectre d'un rayonnement ayant traversé l'objet de calibration $10_c$ parallèlement à l'axe de propagation $12_z$, sans avoir interagi avec l'objet de calibration $10_c$. On observe un pic, dit pic de calibration, centré à une énergie de 120 keV, ce qui est conforme à l'énergie $E$ obtenue par l'équation (2) en considérant $\chi = 2.469$ nm$^{-1}$ et $\theta = 2.5°$. Le pic de calibration s'étend en deçà et au-delà de 120 keV en raison de la résolution en énergie du détecteur et la dispersion angulaire associée au pixel $20_k$. Son intégrale $I_{k,c,z}$, représentée sur la figure 3D, peut être aisément obtenue par un algorithme de traitement de spectre, usuel dans le domaine de la spectrométrie. Cette intégrale représente une quantité de rayonnement détecté par le pixel $20_k$, dans le pic de calibration, lorsque l'objet de calibration est placé dans une position z. A chaque position z de l'objet de calibration $10_c$, on détermine ainsi l'intégrale $I_{k,c,z}$ du pic de calibration, sur la base du spectre de calibration $S_{k,c,z}^{E}$, de préférence normalisé par le spectre en transmission $S_{0,c}^{E}$. La fonction de dispersion spatiale d'intensité $g_k$, associée à chaque pixel $20_k$ comporte alors, pour l'ensemble des positions z, l'intégrale $I_{k,c,z}$ du pic de calibration. Autrement dit : $g_k(z) = I_{k,c,z}$ (13)

On dispose alors de valeurs d'intensité $I_{k,c,z}$ représentant une quantité de photons détectée par un pixel $20_k$, dans un pic représentatif de l'objet de calibration 10c, lorsque ce dernier occupe une position z dans l'objet.

On peut alors établir la matrice de dispersion spatiale d'intensité $G$, telle que représentée sur la figure 3E dont chaque terme $G(k,z) = g_k(z) = I_{k,c,z}$ .Cette matrice représente l'intensité d'un rayonnement diffusé détecté par un pixel $20_k$, provenant d'un volume élémentaire $V_z$ de l'objet centré en z. Elle est de dimension $(N_k, N_z)$. Chaque ligne *k* de cette matrice représente une fonction de dispersion spatiale d'intensité $g_k$ d'un pixel $20_k$ associé à ladite ligne. Les valeurs des intensités $I_{k,c,z}$ sont exprimées selon l'échelle des niveaux de gris.

Ainsi, la détermination de la matrice de dispersion spatiale *G* comprend les étapes suivantes :

- disposition de l'objet de calibration $10_c$, constitué d'un matériau connu, selon une position z, dans le champ d'observation du détecteur 20 (étape 200) ;

- à ladite position z, mesure du spectre de calibration $S_{k,c,z}^E$ par les pixels $20_k$ du détecteur 20 (étape 210) ;

- normalisation de chaque spectre de calibration $S_{k,c,z}^E$ par un spectre en transmission $S_{c,0}^E$ mesuré à travers l'objet de calibration par le détecteur auxiliaire $20_0$ (étape 220), une telle normalisation étant optionnelle, mais préférable.

- dans chaque spectre de calibration ainsi normalisé, détermination de l'intensité $I_{k,c,z}$ d'un pic de calibration représentatif du matériau constituant l'objet de calibration (étape 230);

- réitération des étapes 210 à 230 en déplaçant l'objet de calibration successivement à différentes positions z dans le champ d'observation du deuxième collimateur (étape 240) ;

- à l'aide des intensités $I_{k,c,z}$, obtention de la fonction de dispersion spatiale $g_{k,z}$ associée à chaque pixel et de la matrice de dispersion spatiale *G* (étape 250).

A certaines positions z de l'objet de calibration $10_c$, le spectre de calibration $S_{k,c,z}^E$ mesuré par un pixel $20_k$ peut ne pas comporter de pic de calibration identifiable. Dans ce cas, ce spectre de calibration n'est pas pris en compte pour déterminer la fonction de dispersion associée au pixel.

Obtention des fonctions de dispersion spatiale d'angles de diffusion $h_k$

On se réfère à nouveau à la figure 3B. La détermination d'une fonction de dispersion spatiale d'angles de diffusion $h_k$ associée à un pixel $20_k$ est realisée en suivant les étapes 200, 210, 220, et 230, les étapes 210 à 230 étant mises en oeuvre pour différentes positions z dans le champ d'observation du deuxième collimateur 40.

Sur chaque spectre de calibration $S_{k,c,z}^E$ acquis par un pixel $20_k$, et de préférence normalisé par le spectre en transmission $S_{0,c}^E$, on détermine l'énergie $E_{k,c,z}$ correspondant à un pic de calibration représentatif d'un matériau constituant le pic de calibration. Ce matériau étant connu, le transfert de quantité de mouvement correspondant à l'énergie du pic de calibration est également connu, par exemple $\chi = 2.469$ nm$^{-1}$ pour de l'aluminium. La détermination de l'énergie $E_{k,c,z}$ du pic de calibration fait l'objet de l'étape 230.

L'angle de diffusion $\theta_{k,c,z}$ associé à ce pic peut être obtenu en utilisant l'expression (2), connaissant l'énergie $E_{k,c,z}$. Ainsi, à chaque position z, pour laquelle le spectre de calibration $S_{k,c,z}^E$ présente un pic de calibration identifiable, peut être associé un angle de diffusion $\theta_{k,c,z}$ des rayonnements de diffusion détectés par le pixel $20_k$. La détermination de cet angle de diffusion fait l'objet de l'étape 235. Lorsque le matériau de calibration occupe certaines positions z, un pixel peut ne collecter aucun rayonnement de diffusion. Dans ce cas, le spectre de calibration $S_{k,c,z}^E$ ne fait apparaître aucun pic significatif et aucun angle de diffusion n'est donc associé au pixel à cette position.

La figure 3F représente les différents angles de diffusion $\theta_{k,c,z}$ associés à chaque pixel $20_k$ en fonction de la position z de l'objet de calibration le long de l'axe de propagation $12_z$. Sur cette figure, l'axe des abscisses représente la position z et l'axe des coordonnées désigne la référence du pixel $20_k$, sachant qu'il s'agit ici de pixels virtuels espacés de 150 $\mu$m. Les valeurs des angles de diffusion $\theta_{k,c,z}$ sont exprimées selon l'échelle des niveaux de gris.

La distribution des angles de diffusion $\theta_{k,c,z}$ des rayonnements diffusés détectés par un pixel $20_k$ en fonction de la position z constitue une fonction de dispersion spatiale des angles de diffusion $h_k$ dudit pixel, de telle sorte que $h_k(z) = \theta_{k,c,z}$, où $\theta_{k,c,z}$ désigne un des angles de diffusion déterminés lors d'une position z de l'objet de calibration. La détermination de cette fonction fait l'objet de l'étape 260. Chaque ligne k de la figure 3F représente une fonction de dispersion spatiale d'angles de diffusion $h_k$ d'un pixel $20_k$. Cette fonction de dispersion est discrète, et n'est définie que pour les coordonnées z pour lesquels un angle de diffusion $\theta_{k,c,z}$ a été déterminé pour ledit pixel $20_k$, c'est-à-dire un angle de diffusion pour lequel le spectre de calibration $S_{k,c,z}^{E}$ présente un pic de calibration exploitable.

Par ailleurs, à chaque couple pixel $20_k$ / position z peut être établie une intensité $I_{k,c,z}$ d'un pic de calibration, comme décrit en lien avec la détermination de la fonction de dispersion spatiale d'intensité $g_k$.

Pour un pixel $20_k$, on peut déterminer un angle de diffusion moyen $\theta_k$ en effectuant une moyenne pondérée de chaque angle de diffusion $\theta_{k,c,z}$, correspondant à une position z, par l'intensité $I_{k,c,z}$ du pic de calibration correspondant à cette même position.

Autrement dit,

$$\theta_k = \sum_z \frac{\theta_{k,c,z} \times I_{k,c,z}}{I_{k,c,z}} = \sum_z \frac{h_k(z) \times I_{k,c,z}}{I_{k,c,z}} \ (17)$$

La figure 4A représente des angles moyens de dispersion $\theta_k$ obtenus pour différents pixels $20_k$. La figure 4B représente l'effet d'un changement de variable en utilisant ledit angle moyen de dispersion. On a représenté, sur cette figure, un spectre en énergie cumulé $S^E$ obtenu en effectuant la somme des spectres acquis $S_k^E$ par 16 pixels virtuels $20_1...20_{16}$ alors que l'objet est constitué d'aluminium. Par ailleurs, chaque spectre acquis par chaque pixel virtuel $20_k$ a fait l'objet d'un recalage en effectuant un changement de variable entre l'énergie $E$ et le transfert de quantité de mouvement selon l'équation : $\chi = \dfrac{E\sin\left(\frac{\theta_k}{2}\right)}{hc}$ (18), (18) $\theta_k$ représentant l'angle de diffusion moyen associé au pixel $20_k$.

Les spectres ainsi recalés, notés $S_k^{\chi}$ car ils dépendent du transfert de quantité de mouvement ont été sommés de façon à constituer un spectre cumulé $S^{\chi}$ du transfert de quantité de mouvement. Ce spectre est représenté sur la figure 4B. Le spectre $S^{\chi}$ obtenu après sommation des spectres recalés permet de mieux identifier un pic caractéristique de l'aluminium à $\chi$ = 2.469 nm$^{-1}$.

Obtention des fonctions de dispersion angulaire d'intensité $j_k$

Sur chaque pixel $20_k$, il est possible d'établir à la fois l'intensité $I_{k,c,z}$ et l'angle de diffusion $\theta_{k,c,z}$ d'un pic de calibration obtenu sur un spectre de calibration $S_{k,c,z}^{E}$ lorsque l'objet de calibration $10_c$ est placé à chaque position z. On peut alors obtenir, pour ledit pixel, une fonction de dispersion angulaire d'intensité, notée $j_k$. Elle s'exprime alors selon la forme $j_k(\theta) = I_{k,c,z}$ lorsque $\theta = \theta_{k,c,z}$. En se référant à la figure 3B, la détermination de cette fonction fait l'objet de l'étape 270. La figure 5A montre des fonctions de dispersion angulaires d'intensité associées à différents pixels. Chaque fonction de dispersion angulaire d'intensité associée à un pixel $20_k$ est discrète, et n'est définie que pour les angles de diffusion $\theta_{k,c,z}$ pour lesquels le spectre de calibration $S_{k,c,z}^{E}$ présente un pic de calibration exploitable. L'échelle des niveaux de gris détermine les pixels dont les fonctions de dispersion angulaire d'intensité sont représentés sur cette figure.

Chaque fonction de dispersion angulaire d'intensité $j_k$ peut être interpolée afin d'obtenir une distribution continue entre les différents angles $\theta_{k,c,z}$. On constitue alors une fonction de dispersion angulaire d'intensité dite interpolée $j_k^i$, l'exposant $i$ désignant le fait que la fonction de dispersion angulaire est interpolée. La figure 5B représente les fonctions de dispersion angulaire d'intensité interpolées obtenues, pour différents pixels, à partir des fonctions de dispersion angulaire d'intensité tracées sur la figure 5A. L'échelle des niveaux de gris de la figure 5B est le même que celui utilisé sur la figure 5A.

Pour chaque pixel $20_k$, la fonction de dispersion angulaire d'intensité interpolée $j_k^i$, associée à un pixel $20_k$ permet d'établir la matrice de réponse angulaire $A_k$ associée audit pixel, précédemment évoquée. Chaque ligne (ou colonne) de ladite matrice de réponse angulaire $A_k$ est associée à une énergie $E$ et représente une distribution probabilité de la quantité de mouvement $\chi$ lorsque ledit pixel détecte un rayonnement à ladite énergie $E$.

La figure 5C représente une telle matrice de réponse angulaire, dont chaque terme $A_k(E,\chi) = j_k(\theta)$ lorsque

$$E = \frac{hc\chi}{sin\left(\frac{\theta}{2}\right)}.$$

Le recours à des pixels de faible taille, qu'il s'agisse de pixels physiques ou virtuels, permet de limiter le champ d'observation de chaque pixel. De ce fait, dans cet exemple la matrice de dispersion angulaire $A_k$ peut être considérée comme étant la matrice diagonale, avec $A_k(E,\chi) = 1$ lorsque $E = \frac{hc\chi}{sin\left(\frac{\theta_k}{2}\right)}$ cette matrice diagonale étant représentée sur la figure 5D, $\theta_k$ étant défini selon l'expression (17).

Ainsi, la détermination d'une fonction de dispersion angulaire d'intensité, qu'elle soit discrète ou interpolée, permet d'établir une matrice de dispersion angulaire pour chaque pixel du détecteur.

Obtention de la fonction de diffusion $f_{k,ref}^{\chi}$ du matériau de référence pour chaque pixel $20_k$.

L'étape 160 nécessite la connaissance de la fonction de diffusion de chaque pixel $20_k$ lorsqu'il détecte un rayonnement de diffusion provenant du matériau de référence $10_{ref}$. En présence d'un tel matériau, occupant l'ensemble des volumes élémentaires $V_z$ dans le champ d'observation du deuxième collimateur 40, la signature de diffusion $f_{Z,ref}^{\chi}$ de chaque volume élémentaire $V_z$ correspond à une signature de diffusion $f_{ref}^{\chi}$ du matériau de référence, connue et commune à l'ensemble des volumes élémentaires. La fonction de diffusion $f_{k,ref}^{\chi}$ de chaque pixel est obtenue selon l'expression (9), en constituant une matrice $F_{Z,ref}$ dont chaque ligne correspond à la signature de diffusion $f_{ref}^{\chi}$ du matériau de référence. On obtient une matrice $F_{k,ret} = G.F_{Z,ref}$ (16), chaque ligne de la matrice $F_{k,ret}$ représentant la fonction de diffusion $f_{k,ref}^{\chi}$, associée à chaque pixel $20_k$, de l'objet de référence $10_{ref}$.

Obtention des fonctions spectrales d'atténuation

Le procédé décrit ci-avant suppose, de préférence, l'utilisation des fonctions spectrales d'atténuation $Att$ et $Att_{ref}$, représentant respectivement l'atténuation du faisceau incident collimaté $12_c$ par l'objet 10 et par l'objet de référence $10_{ref}$. Ces fonctions sont respectivement obtenues en utilisant le détecteur auxiliaire $20_0$, placé en transmission, ce dernier mesurant :

- un spectre en énergie $S_{inc}$ du faisceau incident collimaté $12_c$, ce spectre étant obtenu sans objet disposé entre le détecteur $20_0$ et le premier collimateur 30.

- un spectre en énergie $S_0^E$ ou $S_{0,ref}^E$ du rayonnement transmis $14_0$, selon l'axe de propagation $12_z$, par l'objet 10 ou l'objet de référence $10_{ref}$. Ce rayonnement transmis n'a pas subi d'interaction avec l'objet (ou avec l'objet de référence).

Ayant acquis ces spectres, on peut définir une fonction spectrale d'atténuation par une comparaison, généralement sous la forme d'un ratio, entre ces spectres. Ainsi, l'atténuation $Att$ de l'objet 10 est obtenue par un ratio entre $S_{inc}$ et $S_0^E$, et l'atténuation $Att_{ret}$ de l'objet de référence est obtenue par un ratio entre $S_{inc}$ et $S_{0,ref}^E$. Cela correspond aux équations suivantes :

$$Att = \frac{S_{inc}}{S_0^E} \ (20) ;$$

$$Att_{ref} = \frac{S_{inc}}{S_{0,ref}^E} \ (21)$$

Essai expérimental

Un essai expérimental a été réalisé en utilisant un objet test $10_{test}$ constitué d'une plaque de cuivre $10_{test-1}$ d'épaisseur 1 cm et d'une plaque d'aluminium $10_{test-2}$ d'épaisseur 1 cm, ces deux plaques étant espacées de 2 cm. L'angle de collimation $\Theta$ est ici égal à 5°. Le dispositif expérimental est représenté sur la figure 6A.

Les mesures de références $f_{k,ref}^{E}$ et $Att_{ref}$, permettant l'obtention des fonctions de diffusion $f_{k}^{E}$ de chaque pixel (cf. étape 140), sont effectuées en utilisant un bloc de plexiglas d'épaisseur 10 cm.

On a tout d'abord disposé le bloc de plexiglas, puis déterminé, à l'aide du détecteur auxiliaire $20_{0}$, un spectre de transmission $S_{0,ref}^{E}$. Ce détecteur auxiliaire permet également de mesurer un spectre $S_{inc}$ du faisceau incident collimaté $12_{c}$, sans aucun objet disposé entre le détecteur auxiliaire $20_{0}$ et le premier collimateur 30. On a ainsi déterminé une fonction spectrale $Att_{ref}$ d'atténuation du matériau de référence sur la base d'un ratio entre $S_{0,ref}^{E}$ et $S_{inc}$ selon l'équation (21).

On a également déterminé le spectre $S_{k,ref}^{E}$ du rayonnement de diffusion du matériau de référence, en l'occurrence le plexiglas pour différents pixels virtuels $20_{k}$. La figure 6B représente ces différents spectres. Sur cette figure, l'axe des abscisses représente l'énergie et l'axe des ordonnées représente la référence de chaque pixel virtuel, l'échelle en niveau de gris représentant l'intensité. Chaque ligne de cette figure représente le spectre acquis par chaque pixel, l'intensité étant indiquée par l'échelle des niveaux de gris.

On a ensuite déterminé la fonction spectrale d'atténuation $Att$ de l'objet test $10_{test}$ en effectuant une mesure d'un spectre par le détecteur auxiliaire $20_{0}$ avec et sans objet test, de façon à acquérir respectivement les spectres $S_{0}^{E}$ et $S_{inc}$, dont le ratio permet d'établir cette fonction spectrale d'atténuation $Att$, selon l'expression (20).

On a ensuite acquis les spectres de diffusion $S_{k}^{E}$ de l'objet test par différents pixels virtuels $20_{k}$, ces spectres étant représentés sur la figure 6C. Sur cette figure, l'axe des abscisses représente l'énergie et l'axe des ordonnées représente la référence de chaque pixel virtuel, l'intensité étant indiquée par l'échelle des niveaux de gris.

Chaque spectre de diffusion a ensuite été normalisé selon l'équation (7), en utilisant les spectres $S_{k,ref}^{E}$ de façon à obtenir, pour chaque pixel $S_{k}^{E}$, un spectre normalisé $S'^{E}_{k}$.

A partir de chaque spectre normalisé $S'^{E}_{k}$, on a obtenu les signatures spectrales $f_{k}^{\chi}$ de chaque pixel $20_{k}$ exprimées en fonction du transfert de quantité de mouvement $\chi$ (cf. équation 8), en utilisant une fonction de diffusion $f_{k,ref}^{\chi}$ du matériau de référence $10_{ref}$ établie grâce à l'équation 16. Les figures 6D et 6E représentent respectivement les signatures de diffusion $f_{k}^{E}$ et $f_{k}^{\chi}$ exprimées respectivement en fonction de l'énergie et du transfert de quantité de mouvement. L'intensité est indiquée par l'échelle des niveaux de gris.

Connaissant la matrice de dispersion spatiale $G$, on a obtenu la signature de diffusion $f_{z}^{\chi}$ de différents volumes élémentaires répartis, dans l'objet, selon l'axe de propagation $12_{z}$ en appliquant les équations (9) et (10). Ces signatures de diffusion sont reportées sur la figure 6F, la coordonnée z = 0 désignant le centre de l'objet test. On retrouve bien des signatures spécifiques de l'Aluminium et du cuivre.

La figure 6G illustre les différents matériaux finalement déterminés en fonction de la coordonnée z. Le cuivre et l'aluminium sont correctement identifiés. L'espace d'air entre les deux matériaux n'a pas été identifié, ce qui explique que l'espace entre l'aluminium et le cuivre est considéré comme occupé soit par de l'aluminium, soit par du cuivre. La présence d'eau à une extrémité de l'objet résulte d'un effet de bord.

L'invention pourra être mise en oeuvre dans les applications de type contrôle non destructif ou d'aide au diagnostic médical, en mettant en oeuvre un collimateur comportant un seul canal, comme décrit en lien avec la description détaillée, ou un collimateur comportant plusieurs canaux.

Par ailleurs, bien que décrite en lien avec un deuxième collimateur 40 disposant d'un seul canal 42, le procédé d'établissement de fonctions de dispersion, qu'il s'agisse d'une fonction de dispersion angulaire ou spatiale, peut s'appliquer à d'autres types de collimation, par exemple des collimateurs disposant d'une pluralité de canaux, par exemple des canaux disposés parallèlement les uns aux autres, ou de collimation de type masques codés, par lesquels un même pixel voit l'objet à travers différents canaux.

## Revendications

1. Procédé de calibration d'un dispositif d'analyse (1) d'un objet (10), ledit dispositif d'analyse comportant :

   - une source d'irradiation (11) apte à irradier ledit objet (10), configurée pour émettre un rayonnement électromagnétique ionisant (12) se propageant vers l'objet (10) selon un axe de propagation ($12_z$) ;
   - un détecteur (20), comportant au moins un pixel ($20_k$), apte à détecter un rayonnement diffusé ($14_\theta$) par l'objet (10) ainsi irradié, et à en acquérir un spectre en énergie, ledit rayonnement diffusé ($14_\theta$) se propageant selon une direction formant un angle, dit angle de diffusion ($\theta$), aigu par rapport audit axe de propagation ($12_z$) ;

   le procédé de calibration étant **caractérisé en ce qu'**il comprend les étapes suivantes :

   a) irradiation d'un objet de calibration ($10_c$) par ladite source d'irradiation (11), de telle sorte qu'au moins un pixel ($20_k$) dudit détecteur détecte un rayonnement diffusé ($14_\theta$) par l'objet de calibration ($10_c$) ainsi irradié, et en acquiert un spectre en énergie ;
   b) déplacement de l'objet de calibration ($10_c$) successivement selon différentes positions (z) le long dudit axe de propagation ($12_z$), et à chaque position, acquisition, par ledit pixel ($20_k$), d'un spectre $(S^E_{k,c,z})$ du rayonnement diffusé par l'objet de calibration ($10_c$) dit spectre de calibration, chaque spectre de calibration étant associé à une position (z) de l'objet de calibration ($10_c$);
   c) sur chaque spectre de calibration $(S^E_{k,c,z})$ acquis lors de l'étape b), identification d'un pic de calibration caractéristique de l'objet de calibration ($10_c$) ;
   d) détermination d'un paramètre ($I_{k,c,z}$, $E_{k,c,z}$) du pic de calibration identifié lors de l'étape c) ;
   e) obtention d'une fonction de dispersion ($g_k$, $h_k$, $j_k$,) associée audit pixel ($20_k$) à partir des paramètres ($I_{k,c,z}$, $E_{k,c,z}$) déterminés lors de l'étape d) aux différentes positions (z) de l'objet de calibration ($10_c$), ladite fonction de dispersion représentant une dispersion de l'intensité et/ou de l'angle de diffusion de rayonnements diffusés ($14_\theta$) détectés par ledit pixel aux différentes positions (z) de l'objet de calibration ($10_c$).

2. Procédé selon la revendication 1, dans lequel :

   - l'étape d), comporte une détermination d'une intensité ($I_{k,c,z}$) dudit pic de calibration identifié sur chaque spectre de calibration $(S^E_{k,c,z})$ ;
   - l'étape e) comporte une détermination d'une fonction de dispersion ($g_k$), dite fonction de dispersion spatiale d'intensité, à partir des intensités ($I_{k,c,z}$) du pic de calibration déterminées à chaque position (z) de l'objet de calibration ($10_c$), ladite fonction de dispersion représentant une quantité de rayonnement diffusé ($I_{k,c,z}$) détectée par ledit pixel en fonction de la position (z) de l'objet de calibration ($10_c$).

3. Procédé selon la revendication 1 dans lequel :

   - l'étape d), comporte une détermination d'une énergie ($E_{k,c,z}$) dudit pic de calibration identifié sur chaque spectre de calibration $(S^E_{k,c,z})$ ;
   - l'étape e) comporte :

     ▪ un calcul d'un angle de diffusion ($\theta_{k,c,z}$) à partir de ladite énergie ($E_{k,c,z}$) déterminée sur chaque spectre de calibration ;
     ▪ une détermination d'une fonction de dispersion ($h_k$), dite fonction de dispersion spatiale des angles de diffusion, à partir des angles de diffusion ($\theta_{k,c,z}$) obtenus à chaque position (z) de l'objet de calibration, ladite fonction de dispersion représentant les angles de diffusion ($\theta_{k,c,z}$) des rayonnements diffusés détectés par ledit pixel ($20_k$) en fonction de la position (z) de l'objet de calibration ($10_c$).

**4.** Procédé selon la revendication 3, comportant une étape f) de détermination d'un angle de diffusion moyen ($\theta_k$), pour ledit pixel ($20_k$).

**5.** Procédé selon la revendication 1, dans lequel :

- l'étape d) comporte une détermination d'une intensité ($I_{k,c,z}$) et de l'énergie ($E_{k,c,z}$) dudit pic de calibration identifié sur chaque spectre de calibration $(S^E_{k,c,z})$ ;
- l'étape e) comporte,

■ un calcul d'un angle de diffusion ($\theta_{k,c,z}$) à partir de ladite énergie ($E_{k,c,z}$) déterminée sur chaque pic de calibration, ledit angle de diffusion étant associé à ladite intensité ($I_{k,c,z}$) dudit pic de calibration ;
■ une détermination d'une fonction de dispersion ($j_k$), dite fonction de dispersion angulaire d'intensité, représentant une distribution de l'intensité ($I_{k,c,z}$) des rayonnements de diffusion détectés par ledit pixel en fonction de l'angle de diffusion ($\theta_{k,c,z}$) de ces rayonnements.

**6.** Procédé selon la revendication 5, comportant une étape f') d'interpolation de ladite fonction de dispersion angulaire d'intensité ($j_k$), entre les différents angles de diffusion ($\theta_{k,c,z}$) obtenus lors de l'étape e), à chaque position (z) de l'objet de calibration ($10_c$), de façon à obtenir une fonction de dispersion angulaire d'intensité dite interpolée $(j^i_k)$.

**7.** Procédé selon la revendication 6 comportant une étape g) de détermination d'une matrice de réponse angulaire ($A_k$), associée audit pixel ($20_k$), à partir de ladite fonction de dispersion angulaire d'intensité interpolée $(j^i_k)$, chaque ligne ou colonne de ladite matrice ($A_k$) étant associée à une énergie (E) et représentant une distribution probabilité du transfert de quantité de mouvement ($\chi$) lorsque ledit pixel détecte un rayonnement de diffusion à ladite énergie (E).

**8.** Procédé selon l'une quelconque des revendications précédentes, dans lequel le détecteur (20) comprend une pluralité de pixels ($20_k$), le procédé comportant une détermination de ladite fonction de dispersion ($g_k$, $h_k$, $j_k$,) pour chaque pixel ($20_k$).

**9.** Procédé selon l'une quelconque des revendications précédentes, dans lequel les pixels ($20_k$) sont des pixels virtuels, obtenus par une sub-pixelisation de pixels physiques du détecteur (20).

**10.** Support d'enregistrement d'informations, lisible par un processeur, comportant des instructions pour l'exécution de l'étape e) d'un procédé selon l'une quelconque des revendications 1 à 9, ces instructions étant aptes à être exécutées par un processeur (22), à partir d'un paramètre d'un pic de calibration obtenu suite à une mise en oeuvre des étapes a) à d) dudit procédé.

**Patentansprüche**

**1.** Verfahren zur Kalibrierung einer Analysevorrichtung (1) eines Objekts (10), wobei die Analysevorrichtung umfasst:

- eine Strahlungsquelle (11), die geeignet ist, das Objekt (10) zu bestrahlen, und die konfiguriert ist, um eine ionisierende elektromagnetische Strahlung (12) zu entsenden, die sich zu dem Objekt (10) entlang einer Ausbreitungsachse ($12_z$) ausbreitet;
- einen Detektor (20), umfassend mindestens ein Pixel ($20_k$), der geeignet ist, eine von dem so bestrahlten Objekt (10) gestreuten Strahlung ($14_\theta$) zu erfassen und deren Energiespektrum zu erlangen, wobei sich die gestreute Strahlung ($14_\theta$) in eine Richtung ausbreitet, die einen spitzen Winkel, Streuwinkel ($\theta$) genannt, in Bezug zur Ausbreitungsachse ($12_z$) bildet;

wobei das Kalibrierungsverfahren **dadurch gekennzeichnet ist, dass** es die folgenden Schritte umfasst:

a) Bestrahlung eines Kalibrierungsobjekts ($10_c$) durch die Strahlungsquelle (11), so dass mindestens ein Pixel ($20_k$) des Detektors eine von dem so bestrahlten Kalibrierungsobjekt ($10_c$) gestreute Strahlung ($14_\theta$) erfasst und deren Energiespektrum erlangt;

b) Bewegung des Kalibrierungsobjekts ($10_c$) nacheinander in verschiedenen Positionen (z) entlang der Ausbreitungsachse ($12_z$), und in jeder Position Erlangung durch das Pixel ($20_k$) eines Spektrums $\left(S_{k,c,z}^{E}\right)$ der von dem Kalibrierungsobjekt ($10_c$) gestreuten Strahlung, Kalibrierungsspektrum genannt, wobei jedes Kalibrierungsspektrum einer Position (z) des Kalibrierungsobjekts ($10_c$) zugeordnet ist;

c) auf jedem in Schritt b) erlangten Kalibrierungsspektrum $\left(S_{k,c,z}^{E}\right)$ Identifikation eines Kalibrierungspeaks, das für das Kalibrierungsobjekt ($10_c$) charakteristisch ist;

d) Bestimmung eines Parameters ($I_{k,c,z}$, $E_{k,c,z}$) des in Schritt c) identifizierten Kalibrierungspeaks;

e) Erhalt einer Dispersionsfunktion ($g_k$, $h_k$, $j_k$), die dem Pixel ($20_k$) zugeordnet ist, aus den in Schritt d) in den verschiedenen Positionen (z) des Kalibrierungsobjekts ($10_c$) bestimmten Parametern ($I_{k,c,z}$, $E_{k,c,z}$), wobei die Dispersionsfunktion eine Dispersion der Stärke und/oder des Streuwinkels von gestreuten Strahlungen ($14_\theta$) darstellt, die von dem Pixel an den verschiedenen Positionen (z) des Kalibrierungsobjekts ($10_c$) erfasst wurden.

2. Verfahren nach Anspruch 1, bei dem:

- der Schritt d) eine Bestimmung einer Stärke ($I_{k,c,z}$) des auf jedem Kalibrierungsspektrum $\left(S_{k,c,z}^{E}\right)$ identifizierten Kalibrierungspeaks umfasst;
- der Schritt e) eine Bestimmung einer Dispersionsfunktion ($g_k$), Funktion einer räumlichen Stärkedispersion genannt, aus den Stärken ($I_{k,c,z}$) des Kalibrierungspeaks, die in jeder Position (z) des Kalibrierungsobjekts ($10_c$) bestimmt wurden, umfasst, wobei die Dispersionsfunktion eine gestreute Strahlungsmenge ($I_{k,c,z}$) darstellt, die von dem Pixel in Abhängigkeit von der Position (z) des Kalibrierungsobjekts ($10_c$) erfasst wurde.

3. Verfahren nach Anspruch 1, bei dem:

- der Schritt d) eine Bestimmung einer Energie ($E_{k,c,z}$) des auf jedem Kalibrierungsspektrum $\left(S_{k,c,z}^{E}\right)$ identifizierten Kalibrierungspeaks umfasst;
- der Schritt e) umfasst:

• eine Berechnung eines Streuwinkels ($\theta_{k,c,z}$) aus der auf jedem Kalibrierungsspektrum bestimmten Energie ($E_{k,c,z}$);
• eine Bestimmung einer Dispersionsfunktion ($h_k$), Raumdispersionsfunktion der Streuwinkel genannt, aus den Streuwinkeln ($\theta_{k,c,z}$), die in jeder Position (z) des Kalibrierungsobjekts erhalten wurden, wobei die Dispersionsfunktion die Streuwinkel ($\theta_{k,c,z}$) der gestreuten und von dem Pixel ($20_k$) erfassten Strahlungen in Abhängigkeit von der Position (z) des Kalibrierungsobjekts ($10_c$) darstellt.

4. Verfahren nach Anspruch 3, umfassend einen Schritt f) der Bestimmung eines durchschnittlichen Streuwinkels ($\theta_k$) für das Pixel ($20_k$).

5. Verfahren nach Anspruch 1, bei dem:

- der Schritt d) eine Bestimmung einer Stärke ($I_{k,c,z}$) und der Energie ($E_{k,c,z}$) des auf jedem Kalibrierungsspektrum $\left(S_{k,c,z}^{E}\right)$ identifizierten Kalibrierungspeaks umfasst;
- wobei der Schritt e) umfasst:

• eine Berechnung eines Streuwinkels ($\theta_{k,c,z}$) aus der auf jedem Kalibrierungsspektrum bestimmten Energie ($E_{k,c,z}$), wobei der Streuwinkel der Stärke ($I_{k,c,z}$) des Kalibrierungspeaks zugeordnet ist;
• eine Bestimmung einer Dispersionsfunktion ($j_k$), Winkeldispersionsfunktion der Stärke genannt, die eine Verteilung der Stärke ($I_{k,c,z}$) der gestreuten Strahlungen darstellt, die von dem Pixel in Abhängigkeit von dem Streuwinkel ($\theta_{k,c,z}$) dieser Strahlungen erfasst werden.

6. Verfahren nach Anspruch 5, umfassend einen Schritt f') der Interpolation der Winkeldispersionsfunktion der Stärke ($j_k$) zwischen den verschiedenen in Schritt e) erhaltenen Streuwinkeln ($\theta_{k,c,z}$) in jeder Position (z) des Kalibrierungsobjekts ($10_c$), um eine so genannte interpolierte Winkeldispersionsfunktion der Stärke ($j_k$) zu erhalten.

7. Verfahren nach Anspruch 6, umfassend einen Schritt g) der Bestimmung einer Winkelantwortmatrix ($A_k$), die dem Pixel ($20_k$) zugeordnet ist, aus der interpolierten Winkeldispersionsfunktion der Stärke $(j_k^i)$, wobei jede Zeile oder Spalte der Matrix ($A_k$) einer Energie ($E$) zugeordnet ist und eine Wahrscheinlichkeitsverteilung der Übertragung einer Bewegungsmenge ($\chi$) darstellt, wenn das Pixel eine Streustrahlung mit der Energie ($E$) erfasst.

8. Verfahren nach einem der vorhergehenden Ansprüche, bei dem der Detektor (20) eine Vielzahl ($20_k$) von Pixels umfasst, wobei das Verfahren eine Bestimmung der Dispersionsfunktion ($g_k$, $h_k$, $j_k$,) für jedes Pixel ($20_k$) umfasst.

9. Verfahren nach einem der vorhergehenden Ansprüche, bei dem die Pixels ($20_k$) virtuelle Pixels sind, die durch eine Sub-Pixelisierung von physischen Pixels des Detektors (20) erhalten werden.

10. Informationsaufzeichnungsträger, der von einem Prozessor lesbar ist, umfassend Befehle für die Ausführung des Schrittes e) eines Verfahrens nach einem der Ansprüche 1 bis 9, wobei diese Befehle geeignet sind, von einem Prozessor (22) auf Basis eines Parameters eines Kalibrierungspeaks, der nach einem Einsatz der Schritte a) bis d) des Verfahrens erhalten wird, ausgeführt zu werden.

**Claims**

1. Method of calibrating a device (1) for analysing an object (10), said analysis device including:

   - a source of irradiation (11) adapted to irradiate said object (10), configured to emit ionizing electromagnetic radiation (12) propagating towards the object (10) along a propagation axis ($12_z$);
   - a detector (20) including at least one pixel ($20_k$) and adapted to detect radiation ($14_\theta$) diffused by the object (10) irradiated in this way and to acquire an energy spectrum thereof, said diffused radiation ($14_\theta$) propagating in a direction at an acute so-called diffusion angle ($\theta$) relative to said propagation axis ($12_z$);
   the calibration method being **characterized in that** it includes the following steps:

   a) irradiation of a calibration object ($10_c$) by said irradiation source (11) so that at least one pixel ($20_k$) of said detector detects radiation ($14_\theta$) diffused by the calibration object ($10_c$) irradiated in this way and acquires an energy spectrum thereof;
   b) movement of the calibration object ($10_c$) to successive different positions ($z$) along said propagation axis ($12_z$) and at each position acquisition by said pixel ($20_k$) of a spectrum $\left(S_{k,c,z}^{E}\right)$ of the radiation diffused by said calibration object ($10_c$), termed a calibration spectrum, each calibration spectrum being associated with a position ($z$) of the calibration object ($10_c$);
   c) in each calibration spectrum $\left(S_{k,c,z}^{E}\right)$ acquired during the step b), identification of a characteristic calibration peak of said calibration object ($10_c$);
   d) determination of a parameter ($I_{k,c,z}$, $E_{k,c,z}$) of the calibration peak identified in the step c);
   e) obtaining a dispersion function ($g_k$, $h_k$, $j_k$) associated with said pixel ($20_k$) from the parameters ($I_{k,c,z}$, $E_{k,c,z}$) determined during the step d) at the various positions ($z$) of said calibration object ($10_c$), said dispersion function representing a dispersion of the intensity and/or the diffusion angle of diffused radiation ($14_\theta$) detected by said pixel at the various positions ($z$) of the calibration object ($10_c$).

2. Method according to Claim 1, in which:

   - the step d) includes determination of an intensity ($I_{k,c,z}$) of said calibration peak identified in each calibration spectrum $\left(S_{k,c,z}^{E}\right)$ ;
   - the step e) includes determination of a so-called intensity spatial dispersion function ($g_k$) from the intensities ($I_{k,c,z}$) of the calibration peak determined at each position ($z$) of the calibration object ($10_c$), said dispersion function representing a quantity of diffused radiation ($I_{k,c,z}$) detected by said pixel as a function of the position ($z$) of the calibration object ($10_c$).

3. Method according to Claim 1 in which:

- the step d) includes determination of an energy ($E_{k,c,z}$) of said calibration peak identified in each calibration spectrum $\left(S_{k,c,z}^{E}\right)$ ;
- the step e) includes:

• calculation of a diffusion angle ($\theta_{k,c,z}$) from said energy ($E_{k,c,z}$) determined in each calibration spectrum;
• determination of a so-called spatial dispersion function ($h_k$) of the diffusion angles from the diffusion angles ($\theta_{k,c,z}$) obtained at each position (z) of the calibration object, said dispersion function representing the diffusion angles ($\theta_{k,c,z}$) of the diffused radiation detected by said pixel ($20_k$) as a function of the position (z) of the calibration object ($10_c$).

4. Method according to Claim 3, including a step f) of determination of a mean diffusion angle ($\theta_k$) for said pixel($20_k$).

5. Method according to Claim 1, in which:

- the step d) includes determination of an intensity ($I_{k,c,z}$) and the energy ($E_{k,c,z}$) of said calibration peak identified in each calibration spectrum $\left(S_{k,c,z}^{E}\right)$ ;
- the step e) includes:

• calculation of a diffusion angle ($\theta_{k,c,z}$) from said energy ($E_{k,c,z}$) determined at each calibration peak, said diffusion angle being associated with said intensity ($I_{k,c,z}$) of said calibration peak;
• determination of a so-called intensity angular dispersion function ($j_k$) representing a distribution of the intensity ($I_{k,c,z}$) of the diffusion radiation detected by said pixel as a function of the diffusion angle ($\theta_{k,c,z}$) of that radiation.

6. Method according to Claim 5, including a step f) of interpolation of said intensity angular dispersion function ($j_k$) between the various diffusion angles ($\theta_{k,c,z}$) obtained in the step e) at each position (z) of the calibration object ($10_c$) so as to obtain a so-called interpolated intensity angular dispersion function $\left(j_k^i\right)$.

7. Method according to Claim 6 including a step g) of determination of an angular response matrix ($A_k$) associated with said pixel ($20_k$) from said interpolated intensity angular dispersion function $\left(j_k^i\right)$, each row or column of said matrix($A_k$) being associated with an energy ($E$) and representing a probability distribution of the movement quantity transfer ($\chi$) when said pixel detects diffusion radiation with said energy ($E$).

8. Method according to any one of the preceding claims, in which the detector (20) includes a plurality of pixels ($20_k$), the method including determination of said dispersion function ($g_k$, $h_k$, $j_{k,}$) for each pixel ($20_k$).

9. Method according to any one of the preceding claims, in which the pixels ($20_k$) are virtual pixels obtained by sub-pixelization of physical pixels of the detector (20).

10. Information storage medium readable by a processor including instructions for the execution of the step e) of a method according to any one of Claims 1 to 9, those instructions being executable by a processor (22), on the basis of a parameter of a calibration peak obtained following an implementation of steps a) to d) of said method.

**Fig. 1A**

**Fig. 1B**

**Fig. 2**

**Fig. 3A**

**Fig. 3B**

E (keV)

**Fig. 3C**

E (keV)

**Fig. 3D**

$I_{k,c,z}$

Pixel ($k$)

$Z$

**Fig. 3E**

Pixel ($k$)

$Z$

**Fig. 3F**

**Fig. 4A**

$E\,(keV), \chi\,(nm^{-1})$

**Fig. 4B**

**Fig. 5A**

**Fig. 5B**

$$E = \frac{hc\chi}{sin\left(\frac{\theta_k}{2}\right)}$$

**Fig. 5C**　　　　　　　　　　**Fig. 5D**

**Fig. 6A**

**Fig. 6B**

**Fig. 6C**

**Fig. 6D**

**Fig. 6E**

**Fig. 6F**

**Fig. 6G**

**EP 3 185 002 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014045045 A

- WO 2016001536 A

**Littérature non-brevet citée dans la description**

- **MONTEMONT et al.** Studying spatial resolution of CZT detectors using sub-pixel positioning for SPECT. *IEEE transactions on nuclear science,* Octobre 2014, vol. 61 (5